(19) Europäisches Patentamt
European Patent Office
Office européen des brevets

(11) **EP 2 891 382 B1**

(12) **EUROPÄISCHE PATENTSCHRIFT**

(45) Veröffentlichungstag und Bekanntmachung des Hinweises auf die Patenterteilung:
**21.06.2017   Patentblatt 2017/25**

(21) Anmeldenummer: **13766880.2**

(22) Anmeldetag: **02.09.2013**

(51) Int Cl.:
**H05B 33/08** (2006.01)

(86) Internationale Anmeldenummer:
**PCT/AT2013/000143**

(87) Internationale Veröffentlichungsnummer:
**WO 2014/032066 (06.03.2014 Gazette 2014/10)**

(54) **BETRIEBSGERÄT ZUR ANSTEUERUNG EINER LED-STRECKE**

OPERATING DEVICE FOR ACTUATING AN LED SECTION

APPAREIL DE COMMANDE PERMETTANT DE COMMANDER UNE LIGNE DE DEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2012   DE 102012215481**

(43) Veröffentlichungstag der Anmeldung:
**08.07.2015   Patentblatt 2015/28**

(73) Patentinhaber: **Tridonic GmbH & Co. KG
6851 Dornbirn (AT)**

(72) Erfinder: **MARENT, Günter
A-6780 Bartholomäberg (AT)**

(74) Vertreter: **Rupp, Christian
Mitscherlich PartmbB
Patent- und Rechtsanwälte
Sonnenstraße 33
80331 München (DE)**

(56) Entgegenhaltungen:
**WO-A1-2008/151800     US-A1- 2011 204 803**

EP 2 891 382 B1

**Beschreibung**

Die Erfindung betrifft ein Betriebsgerät zur Ansteuerung von LED-Strecken. Insbesondere weist das Betriebsgerät einen vorzugsweise getakteten Konverter (beispielsweise einen Flyback-Konverter) und eine lediglich sekundärseitige Steuereinheit auf. Die Flyback-Topologie (auch als isolierter Sperrwandler bezeichnet) wird dabei typischerweise im Bereich kleiner Leistungen eingesetzt.

Das Betriebsgerät ist dabei in zwei galvanisch getrennte Bereiche unterteilt, die der Konverter potentialgetrennt koppelt.

Es ist bereits bekannt, dass Betriebsgeräte für Leuchtmittel eine galvanische Trennung zwischen einem Niederspannungsbereich und einem Hochspannungsbereich des Geräts aufweisen. Dabei sind insbesondere zweistufige Betriebsgeräte bekannt, bei denen ein Wandler (Konverter), der ein Leuchtmittel versorgt, unter Beibehaltung einer Potentialtrennung über eine Steuerschaltung auf der Netzspannungsseite (Primärseite der Potentialtrennung) angesteuert wird. Falls Rückführsignale von der Sekundärseite der Potentialtrennung, also insbesondere aus dem Bereich der Leuchtmittel zu der Steuerschaltung zurückgeführt werden sollen, ist für diese Rückführung ebenfalls eine Potentialtrennung vorgesehen. Die Ansteuerung auf der Sekundärseite der Potentialtrennung erfolgt durch eine weitere Steuerschaltung, die eine von der erstgenannten, auf Netzspannungspotential liegenden Steuerschaltung, getrennt ist.

Nach dem Stand der Technik ist es also vorgesehen, dass eine Ansteuerung einer sekundärseitig angeschlossenen LED-Strecke durch eine Einheit zur Ansteuerung erfolgt, die primärseitig angeordnet ist. Dabei wird das Rückführsignal, das als Ist-Signal zur Ansteuerung des Konverters ausgewertet wird, primärseitig und potentialgetrennt von der sekundärseitigen LED-Strecke ausgewertet. Beispielsweise kann anhand bekannter Bemessungsdaten eines Übertragers und eines Stroms durch den Konverter auf der Primärseite bei eingeschaltetem Schalter des Konverters auf die Zustände auf der Sekundärseite, d.h. z.B. an der LED-Strecke, geschlossen werden.

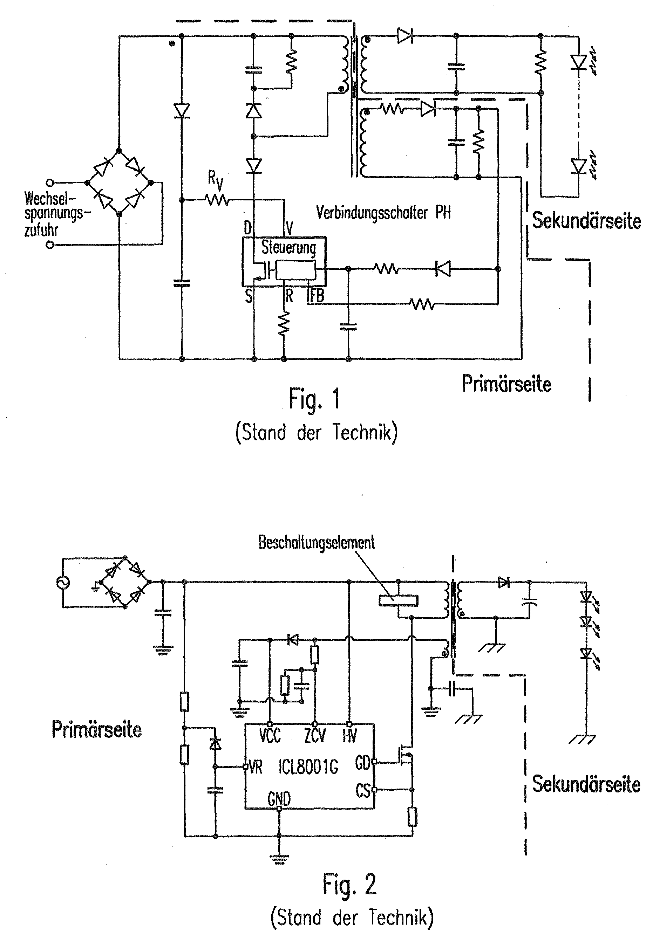

Eine aus dem Stand der Technik bekannte Variante einer Schaltungsanordnung ist in Fig. 1 gezeigt, wobei eine mit ICL 8001G bezeichnete Steuereinheit auf der Primärseite eines Geräts angeordnet ist, während die betriebene LED-Strecke potentialgetrennt sekundärseitig angeordnet ist.

Dies hat den Vorteil, dass eine Steuereinheit auf der Primärseite, d.h. auf Seite des Anschlusses für eine Versorgungsspannung bzw. des Netzanschlusses, Informationen zu Parametern der Versorgungsspannung bzw. Netzparametern leichter ermitteln kann. Ein Schluss auf beispielsweise einen Strom durch die LED-Strecke ist jedoch nicht möglich. Insbesondere können Informationen, die über eine Ermittlung eines Kurzschlusses bzw. eines Leerlaufes hinausgehen, nicht ermittelt werden. Dies ist insbesondere dann problematisch, wenn ein Betriebsgerät LED-Strecken mit einer unterschiedlichen LED Anzahl betreiben können soll.

Eine weitere Schaltungsanordnung aus dem Stand der Technik ist in Fig. 2 gezeigt. Auch hier ist die mit "Control" bezeichnete Einheit zur Ansteuerung der LED-Strecke primärseitig, d.h. auf Netzseite, angeordnet, während die zu versorgende LED-Strecke sekundärseitig und potentialgetrennt von der Versorgungsspannung bzw. Netzspannung angeordnet ist. Die in Fig. 2 dargestellte Einheit zur Ansteuerung ist dabei z.B. unter der Bezeichnung PI LMK403-409/413-419 bekannt.

Wie bereits erwähnt kann, wenn keine (potentialgetrennte) Erfassung des Stroms durch die LED-Strecke erfolgt, auf Grundlage der primärseitigen Erfassung im Wesentlichen nur auf Kurzschluss, Ausfall, etc. geschlossen werden. Der Strom durch die LED-Strecke kann indessen nicht direkt erfasst werden. Auch muss die LED-Strecke unabhängig von der konkreten Anzahl der LEDs in der Strecke mit einem konstant vorgegebenen Strom versorgt werden können, selbst wenn an das Betriebsgerät LED-Strecken mit unterschiedlicher Anzahl von LEDs angeschlossen werden. Die WO2008/151800 A1 offenbart ein Betriebsgerät bzw. ein Verfahren nach der Präambel des Anspruchs 1 bzw. 19. Die Erfindung setzt sich damit zur Aufgabe, eine genauere Erfassung sekundärseitiger Betriebsparameter des Betriebsgeräts und somit eine zuverlässige Ansteuerung der LED-Strecke zu ermöglichen, die eine unterschiedliche Anzahl von LEDs aufweisen kann.

Die Erfindung löst dieses Problem mittels einer Vorrichtung, eines LED-Moduls und eines Verfahrens gemäß der unabhängigen Ansprüche. Weitere Ausgestaltungen der Erfindung sind Gegenstand der abhängigen Ansprüche.

In einem Aspekt stellt die Erfindung ein Betriebsgerät zur Ansteuerung einer LED-Strecke bereit, aufweisend einen primärseitig mit einer Versorgungsspannung versorgten potentialgetrennten getakteten Konverter, insbesondere einen Flyback-Konverter, der an seiner Primärseite zumindest einen getakteten Schalter aufweist, wobei Anschlüsse für die LED-Strecke ausgehend von der Sekundärseite des Konverters versorgt sind, und eine sekundärseitig angeordnete Steuereinheit, die mittels einer Potentialtrennung, insbesondere induktiv, den Schalter ansteuert, wobei auf der Primärseite des Konverters vorzugsweise keine Steuereinheit vorgesehen ist.

Die Versorgung der Steuereinheit erfolgt in einer Anlaufphase ohne Potentialtrennung von der Primärseite.

Der Steuereinheit können ohne Potentialtrennung Rückführsignale zugeführt werden, die zwischen der Sekundärseite des Konverters und der LED-Strecke abgeleitet sind.

Zu der Steuereinheit werden insbesondere keine Rückführsignale oder ein oder mehrere Rückführsignale von der Primärseite zugeführt, wobei die Steuereinheit die Ansteuerung des Schalters und/oder wenigstens ein weiteres Ansteuersignal abhängig von dem Rückführsignal ausführt.

Die Steuereinheit kann wenigstens ein Ansteuersignal für ein aktiv angesteuertes, insbesondere getaktetes Bauteil ausgeben, das zwischen der Sekundärseite des Konverters und der LED-Strecke angeordnet ist.

Die Steuereinheit kann dazu eingerichtet sein, sekundärseitig vorzugsweise indirekt eine Art der Versorgungsspannung, einen Nulldurchgang eines Schaltens des Schalters, einen Parameter, insbesondere einen Spannungs-/Stromwert der Versorgungsspannung, eine Temperatur, insbesondere eine Temperatur der LED-Strecke, einen Strom durch die LED-Strecke, insbesondere einen Durchschnittsstrom, und/oder eine Spannung an der LED-Strecke zu erfassen.

Die Versorgung der Steuereinheit kann in einer Anlaufphase ohne Potentialtrennung von der Primärseite erfolgen. Die Anlaufphase kann enden, wenn der Konverter mit einem vorbestimmten hochfrequenten Takt getaktet ist.

Die Versorgung der Steuereinheit kann in der Anlaufphase über einen hochohmigen Widerstand, insbesondere einen Widerstand größer 1 MΩ, erfolgen.

Die Versorgung der Steuereinheit kann in der Anlaufphase kapazitiv über wenigstens einen Kondensator erfolgen.

Bei kapazitiver Versorgung kann primärseitig eine Zeitschaltung vorgesehen sein, insbesondere mit einem externen RC-Glied, wobei die Zeitschaltung eine, insbesondere geglättete und/oder gleichgerichtete Versorgungsspannung des wenigstens einen Kondensators, periodisch verändert und insbesondere eine Netzspannung oder einen Nullpegel an den wenigstens einen Kondensator ausgibt.

Die Zeitschaltung kann die Versorgungsspannung des wenigstens einen Kondensators so einstellen, dass der Anlaufstrom für die Steuereinheit, z.B. ca. 10 - 100 μA, bereitgestellt ist.

In der Anlaufphase kann der von der Steuereinheit benötigte Anlaufstrom induktiv übertragen werden.

Die sekundärseitige Steuereinheit kann ausgehend von der Sekundärseite des Konverters, insbesondere über eine sekundärseitige Hilfswicklung an dem Konverter versorgt werden.

Zur Ansteuerung des Schalters kann primärseitig ein passives Treibernetzwerk vorgesehen sein. Das Treibernetzwerk kann dazu eingerichtet sein, bei Ansteuerung durch die Steuereinheit den Schalter, insbesondere das Gate eines FET, mit einem von der Steuereinheit festgelegten Takt zu betreiben.

Die Steuereinheit kann dazu eingerichtet sein, den Schalter über einen Optokoppler anzusteuern.

Eine sekundärseitige Konfigurationsmöglichkeit kann vorgesehen sein, um einen Sollwert für einen Strom durch die LED-Strecke, insbesondere abhängig von der LED-Strecke, einzustellen.

Die Potentialtrennung kann eine galvanische Potentialtrennung nach SELV-Standard sein.

Die Steuereinheit kann den Schalter abhängig von einer sekundärseitig erfassten Eingangsspannung ansteuern.

Der potentialgetrennte getaktete Konverter kann beispielsweise auch als Forward-Konverter (Durchflusswandler) oder als Halbbrückenwandler ausgebildet sein.

In einem weiteren Aspekt stellt die Erfindung ein LED-Modul bereit, aufweisend ein Betriebsgerät, wie es vorhergehend beschrieben ist.

In noch einem weiteren Aspekt stellt die Erfindung ein Verfahren zum Betreiben eines Betriebsgeräts für LED-Strecken bereit, wobei: ein potentialgetrennter getakteter Konverter, insbesondere ein Flyback-Konverter, der an seiner Primärseite zumindest einen getakteten Schalter aufweist, primärseitig mit einer Versorgungsspannung versorgt wird und Anschlüsse für die LED-Strecke ausgehend von der Sekundärseite des Konverters versorgt werden, und eine sekundärseitig angeordnete Steuereinheit, die mittels einer Potentialtrennung, insbesondere induktiv, den Schalter ansteuert. Die Versorgung der Steuereinheit erfolgt in einer Anlaufphase ohne Potentialtrennung von der Primärseite.

Die Beschreibung der Erfindung erfolgt nun auch mit Bezug auf die beigefügten Zeichnungen. Dabei zeigen:

Fig. 1    ein erstes Schaltbild für eine Schaltungsanordnung nach dem Stand der Technik.

Fig. 2    ein zweites Schaltbild für eine Schaltungsanordnung nach dem Stand der Technik.

Fig. 3    ein schematisches Blockschaltbild gemäß einer ersten Ausführungsform der Erfindung.

Fig. 4    ein schematisches Blockschaltbild einer zweiten Ausführungsform der Erfindung.

Die erfindungsgemäße Lösung löst sich von dem aus dem Stand der Technik bekannten Ansatz dadurch, dass die intelligenten Schaltungskomponenten des Betriebsgeräts nunmehr sekundärseitig angeordnet sind und vorzugsweise nicht primärseitig.

Dies ermöglicht es, dass Parameter einer LED-Strecke LS besser ausgewertet werden können und deren Zustände (neben Strom, Spannung beispielsweise auch Temperatur) erfassbar sind, ohne dass eine aufwändige potentialgetrennte Signalrückführung zur Primärseite erfolgen muss.

Eine solche Rückführung ist insbesondere dann komplex und aufwändig, wenn nicht nur einfache digitale Zustände rückgeführt werden sollen, sondern z.B. konkrete analoge Informationen. Insbesondere wird also eine Steuereinheit SE in dem Betriebsgerät (beispielsweise eine integrierte Schaltung IC, ASIC, Mikrocontroller, ...) sekundärseitig angeordnet, so dass ihr direkt, d.h. ohne Potentialtrennung, Betriebsparameter der LED-Strecke LS zuführbar sind. Gleichzeitig wird ein Anlauf der Schaltung unter Vermeidung von aufwändigen Versorgungsblöcken oder getakteten Schaltnetzteilen ermöglicht.

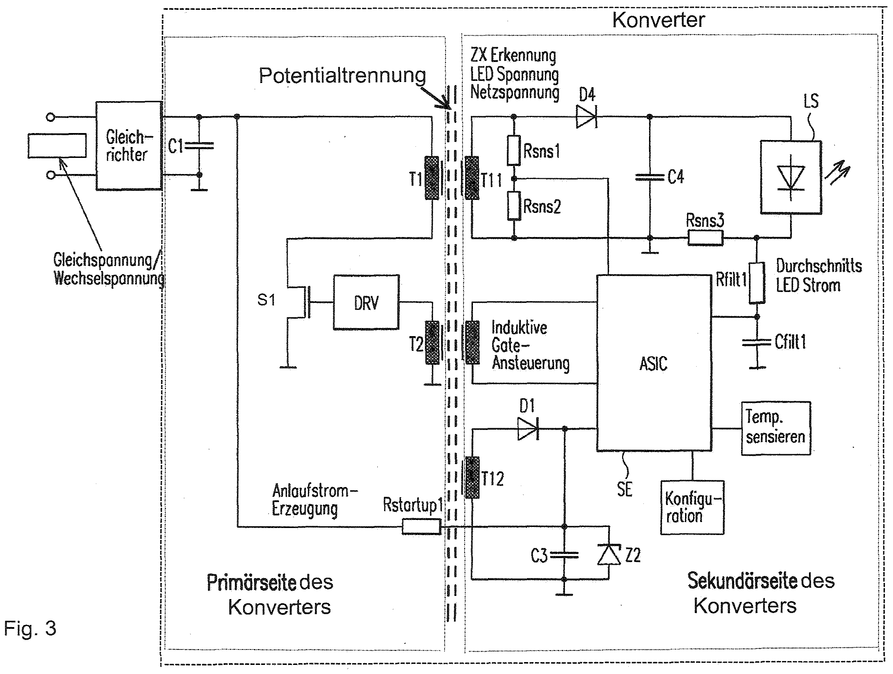

In Fig. 3 ist dabei beispielhaft ein Blockschaltbild eines ersten Ausführungsbeispiels der Erfindung gezeigt. Dabei wird das Betriebsgerät primärseitig mit einem Gleich- oder Wechselstrom (d.h. ausgehend von einer Gleichspannung oder Wechselspannung) versorgt, der dann durch einen Gleichrichter (Rectifier) ggf. gleichgerichtet wird. Über einen mit einem aktiv angesteuerten Schalter S1 getakteten Konverter (Flyback-Konverter) wird dann sekundärseitig die LED-Strecke LS versorgt. Der getaktete Konverter weist einen Transformator T1, T11 zur potentialgetrennten Energieübertragung auf.

Beispielhaft wird die Erfindung anhand eines Beispiels eines Flyback-Konverters als getakteten Konverter erläutert, der potentialgetrennte getaktete Konverter kann beispielsweise auch als Forward-Konverter (Durchflusswandler) oder als Halbbrückenwandler ausgebildet sein. Der potentialgetrennte getaktete Konverter kann beispielsweise auch als resonanter Konverter wie beispielsweise als resonanter und potentialgetrennter Halbbrückenwandler, beispielsweise als LLC Konverter, ausgebildet sein

Der Konverter kann sekundärseitig am Ausgang des Transformators T1, T11 eine Gleichrichtdiode D4 oder eine andere Form eines Gleichrichtelements (bspw. auch einen Vollweggleichrichter) aufweisen. Auf die Gleichrichtdiode D4 kann ein Glättungskondensator C4 folgen. Über den Glättungskondensator C4 wird die LED-Strecke LS gespeist.

Klar zu sehen ist, dass eine Steuereinheit SE, in Fig. 3 auch mit ASIC bezeichnet, sekundärseitig angeordnet ist und beispielsweise am Mittenpunkt eines Spannungsteilers bestehend aus einem ersten Widerstand $R_{sns1}$ und einem zweiten Widerstand $R_{sns2}$ eine Betriebsspannung (LED Spannung) der LED-Strecke LS ermitteln kann. Die Ermittelung der Betriebsspannung der LED-Strecke LS kann vorzugsweise dann erfolgen, wenn die Gleichrichtdiode D4 leitend ist. In dieser Phase entspricht die Spannung am Spannungsteiler aus dem ersten Widerstand $R_{sns1}$ und dem zweiten Widerstand $R_{sns2}$ der Spannungen der Durchlaßspannung der Gleichrichtdiode D4 und der Betriebsspannung der LED-Strecke LS, wenn man davon ausgeht, dass die Spannung über dem Strommesswiderstand Rsns3 vernachlässigt werden kann.

Auch ist es der Steuereinheit SE möglich, beispielsweise einen Durchschnittsstrom ("Durchschnitts LED Strom") durch die LED-Strecke an einem Strommesswiderstand Rsns3 mit Hilfe eines Filters, bestehend aus einem Filter-Widerstand $R_{filt1}$ und einem Filter-Kondensator $C_{filt1}$, am Mittenpunkt zwischen Filter-Widerstand $R_{filt1}$ und Filter-Kondensator $C_{filt1}$ zu ermitteln.

Die Steuereinheit SE kann jedoch auch primärseitige Informationen, indirekt, erfassen, nämlich beispielsweise einen Nulldurchgang des hochfrequenten Stromes auf der Primärseite des Flyback-Konverters (ZX-Detection; ZX-Erkennung) sowie die Netzspannung (Mains Voltage; Netzspannung) als solche. Die primärseitige Eingangsspannung kann somit aus Parametern des Flyback-Betriebs (Tastverhältnis, Frequenz, Wicklungsverhältnisse, usw.) indirekt ermittelt werden. Wenn der primärseitige Schalter S1 eingeschaltet ist, fällt über der Primärwicklung T1 des Transformators in etwa die Eingangsspannung ab. Die während dieser Phase auf der Sekundärseite T11 anliegende Spannung hängt vom Wicklungsverhältnis des Transformators T1, T11 ab. Auf ähnliche Weise kann der Nulldurchgang des hochfrequenten Stromes auf der Primärseite des Flyback-Konverters (ZX-Detection; ZX-Erkennung) auf der Sekundärseite anhand einer Überwachung der Spannung an der Sekundärseite des Transformators T1, T11 erfasst werden. Detaillierte Pegelinformationen bezüglich der Versorgungsspannung bzw. Netzspannung müssen nicht unbedingt erfasst werden, es kann schon die Information lediglich über ein Anliegen oder Nichtanliegen einer Wechselspannung (AC-Spannung) ausreichend sein, bzw. über ein Umschalten oder Anliegen einer Gleichspannung (DC-Spannung), was z.B. einen Notlichtbetrieb anzeigen kann.

Die Steuereinheit SE kann durch ihre sekundärseitige Anordnung dann ebenfalls Temperaturinformationen durch eine Temperaturerfassungseinheit Temp-Sense (Temp. sensieren) an der LED-Strecke LS erfassen und bei der Ansteuerung der LED-Strecke LS in Betracht ziehen. Dabei erfolgt die Steuerung des Flyback-Konverters potentialgetrennt, insbesondere induktiv, durch Ansteuerung eines zweiten Übertragers T2 ("Induktive Gate-Ansteueuerung"). Über die Steuerung des zweiten Übertragers T2 erfolgt dann eine Ansteuerung des Schalters S1, z.B. die Aktivierung/Deaktivierung eines Gates (beispielsweise eines Feldeffekttransistors FET, oder eines MOSFETs). Somit kann die Steuereinheit, obwohl sie sekundärseitig angeordnet ist, den primärseitig angeordneten getakteten Schalter des Flyback-Konverters ansteuern und entsprechend den Takt bzw. die $T_{on}$-Zeit des Flyback-Konverters einstellen. Auf diese Weise kann beispielsweise eine Regelung des Durchschnittsstromes der LED-Strecke LS erfolgen. Der zweite Übertrager kann beispielsweise auch als sog. Coreless Transformer (Luftspule) oder als Optokoppler ausgeführt sein.

Die Versorgung der Steuereinheit kann in einer Anlaufphase ohne Potentialtrennung von der Primärseite über eine Anlaufstrom-Erzeugung erfolgen. In einer Anlaufphase, die insbesondere dann beendet ist, wenn der Flyback-Konverter mit einem vorbestimmten, insbesondere hochfrequenten, Takt betrieben wird, ist die Steuereinheit SE jedoch bereits mit Strom zu versorgen, ohne dass die direkte Versorgung über den Konverter erfolgt.

Eine Anlaufspannung für die Steuereinheit, also die Versorgungsspannung bis zu dem Zeitpunkt, bis zu dem der Flyback-Konverter ordnungsgemäß getaktet ist, erfolgt in dem in Fig. 3 gezeigten Ausführungsbeispiel ohne Potentialtrennung über einen hochohmigen Widerstand $R_{Startup1}$ als ein Beispiel für eine Anlaufstrom-Erzeugung.

Obwohl dadurch zwar die Potentialtrennung durchbrochen wird, ist der Widerstand $R_{Startup1}$ jedoch so dimensioniert, dass die SELV-Bestimmungen (Safety Extra Low Voltage, Sicherheitskleinspannung: kleine elektrische Spannung, die aufgrund ihrer geringen Höhe und der Isolierung im Vergleich zu Stromkreisen höherer Spannung besonderen Schutz gegen einen elektrischen Schlag bietet und die so klein ist, dass elektrische Körperströme im Normalfall ohne Folgen bleiben; DIN EN 61140 (VDE 0140-1)), deren Einhaltung das Ziel der vorliegenden Schaltungsanordnung ist, eingehalten werden.

Im Rahmen dieser SELV-Bestimmungen ist eine hochohmige nicht potentialgetrennte Verbindung ebenfalls zulässig. Dabei liegt der Widerstandswert des Widerstands $R_{Startup1}$ im Mega-Ohm (MΩ) Bereich, d.h. im Bereich von ca. einem Mega-Ohm oder größer.

Sobald die Steuereinheit den Schalter des Flyback-Konverters ordnungsgemäß taktet, erfolgt dann im weiteren Verlauf die Spannungsversorgung der Steuereinheit über eine induktive Auskopplung, die in der Fig. 3 als Hilfswicklung T12 des Transformators T1, T11 dargestellt ist.

Die Ansteuerung des getakteten Schalters S1 erfolgt wie bereits erwähnt über den Übertrager T2. Primärseitig ist dabei zusätzlich ein passives Treibernetzwerk DRV vorgesehen, über das die eigentliche, bzw. direkte Ansteuerung des Schalters S1, erfolgt.

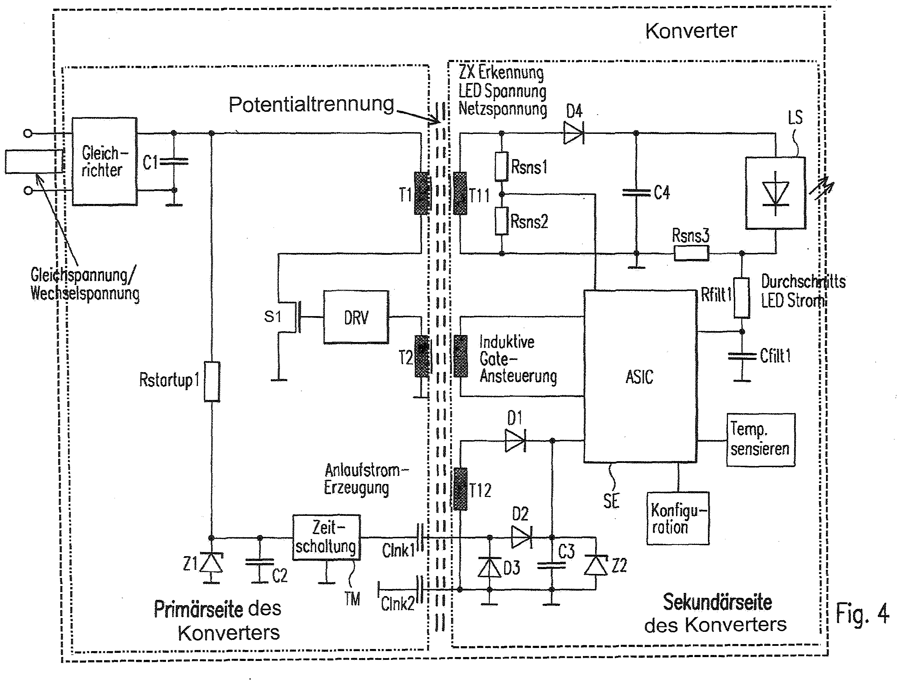

In Fig. 4 ist eine weitere Ausführungsform der Erfindung dargestellt, die als Anlaufstrom-Erzeugung eine kapazitive Anlaufversorgung der Steuereinheit bereitstellt. Die dargestellte Ausführungsform entspricht weitgehend der vorigen. So haben Komponenten mit gleicher Bezeichnung auch gleiche Funktion.

Die Übertragung der Anlaufspannung bzw. der Anlaufenergie für die Steuereinheit SE erfolgt hier jedoch kapazitiv über die Kondensatoren $C_{LNK1}$ und $C_{LNK2}$.

Bei der kapazitiven Versorgung während der Anlaufphase ist es vorteilhaft bzw. ggf. notwendig, eine definierte Veränderung der Eingangsspannung des Kondensators $C_{LNK1}$ vorzusehen. Da in der gezeigten Ausführungsform eine Versorgung ausgehend von einer gleichgerichteten und über einen Kondensator C1 geglätteten Versorgungsspannung vorliegt, ist eine Zeitschaltung TM ("Timer" oder "Zeitschaltung") vorgesehen, die an ihrem Ausgang eine Wechselgröße mit vorgegebener Frequenz (einstellbar durch ein externes RC-Glied, nicht gezeigt) ausgibt.

Typischerweise bewegt sich dieses Signal zwischen der Versorgungsspannung der Zeitschaltung TM und dem Wert Null. Die Zeitschaltung TM wandelt also eine geglättete gleichgerichtete Versorgungsspannung in eine sich definiert verändernde Spannung, die als Versorgung für den Kondensator $C_{LNK1}$ und den Kondensator $C_{LNK2}$ dient.

Die Frequenz der Zeitschaltung TM und die Kapazität des Kondensators $C_{LNK}$ sind so gewählt, dass sich ein gewünschter Anlaufstrom an der Steuereinheit einstellt. Der Anlaufstrom hat typischerweise einen Wert im Bereich von 10-100 Mikroampere. Entsprechend niedrig ist die Frequenz gewählt, mit der die Zeitschaltung die Versorgung des Kondensators $C_{LNK1}$ versorgt. Beispielsweise können die Frequenz und auch die Kapazität des Kondensators relativ niedrig gewählt sein.

Ebenfalls alternativ kann für die Ansteuerung (Gate-Ansteuerung) des getakteten Schalters S1 als zweiter Übertrager auch ein Optokoppler oder ein sog. Coreless Transformer (Luftspule) verwendet werden. Dieser ist dann beispielsweise auf seiner Sekundärseite mit Strom zu versorgen.

Die in Figs. 3 und 4 dargestellten Ausführungsformen weisen weiter eine Konfigurationsmöglichkeit (Konfiguration) auf. Diese Konfigurationsmöglichkeit kann dabei vorgesehen sein, um auf der Sekundärseite eine Sollwertvorgabe für einen Strom (bspw. den Durchschnittsstrom) durch die LED-Strecke einzustellen. Die Konfiguration kann dabei beispielsweise über eine mechanische Eingabeschnittstelle (Schalter, Drehregler, etc.) erfolgen. Eine digitale Schnittstelle zur Übergabe von Parametern und/oder Parameterveränderungen kann jedoch auch alternativ oder zusätzlich vorgesehen sein. Auch hier ist die galvanische Trennung zwischen Primärseite und Sekundärseite vorteilhaft, da bei den Schaltanordnungen nach dem Stand der Technik eine entsprechende manuell zu bedienende Schnittstelle aufwändig galvanisch von den mit Netzspannung versorgen Schaltungskomponenten auf der Primärseite zu trennen wäre.

Vorzugsweise liegt bei der gezeigten Schaltung kein Shunt, also kein Messwiderstand zur Erfassung des Stroms durch den primärseitigen Schalter des Flyback-Konverters, vor. Somit wird nicht direkt erfasst, wenn der Schalterstrom einen vorgegebenen Maximalwert überschreiten würde. Indessen kann eine derartige Überstrom-Überwachung (Overcurrent-Detection) dadurch erfolgen, dass in der sekundärseitigen Steuereinheit eine Vorgabe für die maximal einzustellende $T_{on}$ Zeit des Flyback-Konverters vorgesehen ist.

Diese Einstellung der maximalen $T_{on}$ Zeit erfolgt insbesondere abhängig von den bekannten elektrischen Kennwerten des Flyback-Konverters, insbesondere der Induktivitäten.

Es ist zu berücksichtigen, dass die maximale Eingangsspannung auf der Sekundärseite des Betriebsgerätes bekannt ist. Der Zusammenhang zwischen dem maximalen Strom $I_{max}$ und der maximalen Eingangsspannung $V_{in\_max}$ und der maximalen $T_{on}$ Zeit kann durch die Formel

$$I_{max} = V_{in\_max} * T_{on\_max} / L \text{ bzw.}$$

$$I_{max} \sim V_{in\_max} * T_{on\_max}$$

beschrieben werden. Die Induktivität L des Transformators T1 ist typischerweise aufgrund der Bauteildimensionierung bekannt.

Einerseits ist es somit möglich auf die maximal mögliche Eingangsspannung $V_{in\_max}$ abzustellen und entsprechend die $T_{on}$ Zeit relativ eng zu begrenzen. Die $T_{on}$ Zeit kann jedoch auch abhängig von dem aktuell, zumindest grob ermittelten Wert der Versorgungsspannung/Netzspannung und somit adaptiv bezüglich des Zustandes der Versorgungsspannung erfolgen (z.B. anhand einer hinterlegten Nachschlag-Tabelle). Dabei kann die Versorgungsspannung bzw. die Netzspannung anhand sekundärseitiger Ermittlung abgeschätzt werden, so dass beispielsweise mehrere Stufen für die Beschränkung der $T_{on}$ Zeit vorgesehen sein können. So kann bei geringerer Amplitude der Versorgungsspannung die maximale $T_{on}$ Zeit verlängert und bei höherer Amplitude die $T_{on}$ Zeit verkürzt werden.

Die sekundärseitig angeordnete Steuereinheit SE ist dabei in der Lage, den Strom (bspw. den Durchschnittstrom) durch die LED-Strecke durch Steuerung des Flyback-Konverters einzustellen und den Flyback-Konverter im quasiresonanten Modus, also im Borderline-Betriebsmodus des Flyback-Konverters, zu betreiben. Auch kann sekundärseitig eine Regelung aufgrund des Durchschnittsstroms durch die LED-Strecke erfolgen. Ein Überstromschutz kann dann durch Begrenzung auf eine maximale $T_{on}$ Zeit erfolgen.

Die oben angeführten Ausführungsbeispiele sind nur beispielhaft anhand eines Flyback-Konverters erläutert worden. Der potentialgetrennte getaktete Konverter kann beispielsweise auch durch einen Forward-Konverter (Durchflusswandler) oder einen Halbbrückenwandler gebildet werden.

**Patentansprüche**

1. Betriebsgerät zur Ansteuerung einer LED-Strecke (LS), aufweisend:

   - einen primärseitig mit einer Versorgungsspannung versorgten potentialgetrennten getakteten Konverter, insbesondere einen Flyback-Konverter, der an seiner Primärseite einen getakteten Schalter (S1) aufweist, wobei Anschlüsse für die LED-Strecke (LS) ausgehend von der Sekundärseite des Konverters versorgt sind, und
   - eine sekundärseitig angeordnete Steuereinheit (SE), die dazu eingerichtet ist, mittels einer Potentialtrennung, insbesondere induktiv, den Schalter (S1) anzusteuern,

   **dadurch gekennzeichnet,**

   **dass** das Betriebsgerät dazu eingerichtet ist, die Steuereinheit (SE) in einer Anlaufphase des Betriebsgeräts über eine nichtpotential getrennte Verbindung von der Primärseite aus zu versorgen.

2. Betriebsgerät nach Anspruch 1, wobei der Steuereinheit ohne Potentialtrennung sekundärseitige Rückführsignale zugeführt sind, die zwischen der Sekundärseite des Konverters und der LED-Strecke (LS) abgeleitet sind.

3. Betriebsgerät nach Anspruch 2, wobei zu der Steuereinheit (SE) keine primärseitige Rückführsignale oder ein oder mehrere primärseitige Rückführsignale von der Primärseite zugeführt sind, wobei die Steuereinheit (SE) dazu eingerichtet ist, den Schalter und/oder wenigstens ein weiteres Ansteuersignal abhängig von einem Rückführsignal anzusteuern.

4. Betriebsgerät nach einem der vorgehenden Ansprüche, wobei die Steuereinheit (SE) wenigstens ein Ansteuersignal für ein aktiv angesteuertes, insbesondere getaktetes Bauteil ausgibt, das zwischen der Sekundärseite des Konverters und der LED-Strecke angeordnet ist.

5. Betriebsgerät nach einem der vorgehenden Ansprüche, wobei die Steuereinheit (SE) dazu eingerichtet ist, sekundärseitig vorzugsweise indirekt eine Art der Versorgungsspannung, einen Nulldurchgang eines Schaltens des Schalters (S1), einen Parameter, insbesondere einen Spannungs-/Stromwert der Versorgungsspannung, eine Temperatur (Temp. sensieren), insbesondere eine Temperatur der LED-Strecke, einen Strom durch die LED-Strecke, insbesondere einen Durchschnittsstrom, und/oder eine Spannung an der LED-Strecke zu erfassen.

6. Betriebsgerät nach einem der vorgehenden Ansprüche, wobei das Betriebsgerät so eingerichtet ist, dass die Anlaufphase endet, wenn der Konverter mit einem vorbestimmten hochfrequenten Takt getaktet ist.

7. Betriebsgerät nach einem der vorgehenden Ansprüche, wobei das Betriebsgerät dazu eingerichtet ist, die Steuereinheit (SE) in der Anlaufphase über einen hochohmigen Widerstand ($R_{startup1}$), insbesondere einen Widerstand größer 1 MΩ, zu versorgen.

8. Betriebsgerät nach einem der vorgehenden Ansprüche, wobei die Steuereinheit (SE) ausgehend von der Sekundärseite des Konverters, insbesondere über eine sekundärseitige Hilfswicklung (T12) an dem Konverter versorgbar ist.

9. Betriebsgerät nach einem der vorgehenden Ansprüche, wobei zur Ansteuerung des Schalters (S1) primärseitig ein passives Treibernetzwerk (DRV) vorgesehen ist, und wobei das Treibernetzwerk (DRV) dazu eingerichtet ist, bei Ansteuerung durch die Steuereinheit (SE) den Schalter (S1), insbesondere das Gate eines FET, mit einem von der Steuereinheit festgelegten Takt zu betreiben.

10. Betriebsgerät nach einem der vorgehenden Ansprüche, wobei das Betriebsgerät dazu eingerichtet ist, die Steuereinheit (SE) in der Anlaufphase kapazitiv über wenigstens einen Kondensator ($C_{lnk1}$) zu versorgen.

11. Betriebsgerät nach Anspruch 10, wobei bei kapazitiver Versorgung primärseitig eine Zeitschaltung (TM) vorgesehen ist, insbesondere mit einem externen RC-Glied, wobei die Zeitschaltung (TM) dazu eingerichtet ist, eine, insbesondere geglättete und/oder gleichgerichtete Versorgungsspannung des wenigstens einen Kondensators ($C_{lnk1}$), periodisch zu verändern und insbesondere eine Netzspannung oder einen Nullpegel an den wenigstens einen Kondensator ($C_{lnk1}$) auszugeben.

12. Betriebsgerät nach Anspruch 11, wobei die Zeitschaltung (TM) dazu eingerichtet ist, die Versorgungsspannung des wenigstens einen Kondensators ($C_{lnk1}$) so einzustellen, dass der Anlaufstrom für die Steuereinheit (SE), z.B. ca. 10 - 100 μA, bereitstellbar ist.

13. Betriebsgerät nach einem der vorgehenden Ansprüche, wobei die Steuereinheit (SE) dazu eingerichtet ist, den Schalter (S1) über einen Optokoppler anzusteuern.

14. Betriebsgerät nach einem der vorgehenden Ansprüche, wobei eine sekundärseitige Konfigurationsmöglichkeit (Config) vorgesehen ist, um einen Sollwert für einen Strom durch die LED-Strecke (LS) einzustellen, insbesondere abhängig von einer Anzahl von LEDs der LED-Strecke (LS), einzustellen.

15. Betriebsgerät nach einem der vorgehenden Ansprüche, wobei die Potentialtrennung eine galvanische Potentialtrennung nach SELV-Standard ist.

16. Betriebsgerät nach einem der vorgehenden Ansprüche, wobei die Steuereinheit (SE) dazu eingerichtet ist, den Schalter (S1) abhängig von einer sekundärseitig erfassten Eingangsspannung anzusteuern.

17. LED-Modul, aufweisend ein Betriebsgerät nach einem der vorhergehenden Ansprüche und eine damit versorgte LED-Strecke (LS).

18. Verfahren zum Betreiben eines Betriebsgeräts für LED-Strecken, wobei:

- ein potentialgetrennter getakteter Konverter des Betriebsgeräts, insbesondere ein Flyback-Konverter, der an seiner Primärseite einen getakteten Schalter (S1) aufweist, primärseitig mit einer Versorgungsspannung des Betriebsgeräts versorgt wird und Anschlüsse des Betriebsgeräts für die LED-Strecke (LS) ausgehend von der Sekundärseite des Konverters versorgt werden, und

- eine sekundärseitig angeordnete Steuereinheit (SE) des Betriebsgeräts mittels einer Potentialtrennung, insbesondere induktiv, den Schalter (S1) ansteuert,

**dadurch gekennzeichnet,**
**dass** die Versorgung der Steuereinheit (SE) in einer Anlaufphase des Betriebsgeräts über eine nichtpotential getrennte Verbindung von der Primärseite aus erfolgt.

**Claims**

1. An operating device for actuating an LED section (LS), having:

   - an electrically isolated clocked converter, in particular a flyback converter, which is supplied on the primary side with a supply voltage, which has a clocked switch (S1) on its primary side, wherein the connections for the LED section (LS) are supplied from the secondary side of the converter, and
   - a control unit that (SE) arranged on the secondary side, which is configured to actuate the switch (S1) by means of an electrical isolation, in particular, inductively,

   **characterized in**
   **that** the operating device is configured to supply the control unit (SE) in a start-up phase of the operating unit via a non-electrically isolated connection from the primary side.

2. An operating device according to Claim 1, wherein feedback signals on the secondary side are supplied to the control unit without electrical isolation, which signals are derived between the secondary side of the converter and the LED section (LS).

3. An operating device according to Claim 2, wherein no primary-side feedback signals or one or several primary-side feedback signals are supplied to the control unit (SE) from the primary side, wherein the control unit (SE) is configured to actuate the switch and/or at least one further actuation signal depending on a feedback signal.

**4.** An operating device according to any one of the preceding claims, wherein the control unit (SE) outputs at least one actuation signal, for an actively actuated, in particular, clocked component, which is arranged between the secondary side of the converter and the LED section.

**5.** An operating device according to any one of the preceding claims, wherein the control unit (SE) is configured to detect on the secondary side preferably indirectly a type of the supply voltage, a zero crossing of a switching of the switch (S1), a parameter, in particular a voltage-/current value of the supply voltage, a temperature (temp. sensing), in particular a temperature of the LED section, a current through the LED section, in particular an average current, and/or a voltage on the LED section.

**6.** An operating device according to any one of the preceding claims, wherein the operating device is configured such that the start-up phase ends, if the converter is clocked with a predetermined high-frequency clock.

**7.** An operating device according to any one of the preceding claims, wherein the operating device is configured to supply the control unit (SE) in the start-up phase via a high-ohmic resistance ($R_{startup1}$), in particular a resistance greater than 1 MΩ.

**8.** An operating device according to any one of the preceding claims, wherein the control unit (SE) can be supplied from the secondary side of the converter, in particular, via a secondary auxiliary winding (T12) on the converter.

**9.** An operating device according to any one of the preceding claims, wherein a passive drive network (DRV) is provided on the primary side for the actuation of the switch (S1), and wherein the drive network (DRV) is configured when actuated by the control unit (SE) to drive the switch (S1), in particular the gate of the FET, with a clock determined by the control unit,

**10.** An operating device according to any one of the preceding claims, wherein the operating device is configured to supply the control unit (SE) capacitatively in the start-up phase via at least one capacitor ($C_{inki}$).

**11.** An operating device according to Claim 10, wherein a timing circuit (TM) is provided for capacitive supply on the primary side, in particular with an external RC member, wherein the timing circuit (TM) is configured to change a, in particular, smoothed and/or rectified supply voltage of the at least one capacitor ($C_{inki}$), periodically and to output, in particular, a mains voltage or a zero level to the at least one capacitor ($C_{inki}$).

**12.** An operating device according to Claim 11, wherein the timing circuit (TM) is configured to set the supply voltage of the at least one capacitor ($C_{inki}$) such that the starting current for the control unit (SE), for example, approx. 10 - 100 μA, can be provided.

**13.** An operating device according to any one of the preceding claims, wherein the control unit (SE) is configured, to actuate the switch (S1) via an octocoupler.

**14.** An operating device according to any one of the preceding claims, wherein a secondary-side configuration option (Config) is provided, in order to set a target value for a current through the LED section (LS), in particular to set a target value depending on a number of LEDs of the LED section (LS).

**15.** An operating device according to any one of the preceding claims, wherein the electrical isolation is a galvanic electrical isolation according to the SELV standard.

**16.** An operating device according to any one of the preceding claims, wherein the control unit (SE) is configured to actuate the switch (S1) depending on an input voltage detected on the secondary side.

**17.** An LED module, having an operating device according to any one of the preceding claims and an LED section (LS) supplied with it.

**18.** A method for the operation of an operating device for LED sections, wherein:

- an electrically isolated clocked converter of the operating device , in particular a flyback converter, which has a clocked switch (S1) on its primary side, is supplied on the primary side with a supply voltage of the operating device, and connections of the operating device for the LED section (LS) are supplied from the secondary side of the converter, and
- a control unit (SE) of the operating device that is arranged on the secondary side, actuates the switch (S1) by means of an electrical isolation, in particular, inductively, **characterized in**
- **that** the supply the control unit (SE) in a start-up phase of the operating device takes place via a non-electrically isolated connection from the primary side.

**Revendications**

**1.** Appareil de commande permettant de commander une ligne de LED (LS), présentant :

- un convertisseur cadencé avec séparation de potentiel, alimenté côté primaire par une tension d'alimentation, en particulier un convertisseur indirect, qui présente sur son côté primaire un commutateur (S1) cadencé, des connexions pour la ligne de LED (LS) étant alimentées à partir du côté secondaire du convertisseur,

et

une unité de commande (SE) disposée côté secondaire, qui est agencée pour commander le commutateur (S1) au moyen d'une séparation de potentiel, en particulier par induction,

**caractérisé en ce que**

l'appareil de commande est agencé pour alimenter l'unité de commande (SE) dans une phase de démarrage de l'appareil de commande par le biais d'une liaison sans séparation de potentiel à partir du côté primaire.

2. Appareil de commande selon la revendication 1, des signaux de rétroaction côté secondaire étant acheminés à l'unité de commande sans séparation de potentiel et étant dérivés entre le côté secondaire du convertisseur et la ligne de LED (LS).

3. Appareil de commande selon la revendication 2, aucun signal de rétroaction côté primaire n'étant acheminé à l'unité de commande (SE) ou bien un ou plusieurs signaux de rétroaction côté primaire étant acheminé(s) à l'unité de commande (SE) par le côté primaire, l'unité de commande (SE) étant agencée pour commander le commutateur et/ou au moins un autre signal de commande en fonction d'un signal de rétroaction.

4. Appareil de commande selon l'une des revendications précédentes, l'unité de commande (SE) délivrant au moins un signal de commande pour un composant commandé de façon active, en particulier cadencé, qui est disposé entre le côté secondaire du convertisseur et la ligne de LED.

5. Appareil de commande selon l'une des revendications précédentes, l'unité de commande (SE) étant agencée pour détecter côté secondaire, de préférence de façon indirecte, un type de tension d'alimentation, un passage par zéro d'une commutation du commutateur (S1), un paramètre, en particulier une valeur de tension/d'intensité de la tension d'alimentation, une température (Temp. sensieren), en particulier une température de la ligne de LED, une intensité traversant la ligne de LED, en particulier une intensité moyenne, et/ou une tension sur la ligne de LED.

6. Appareil de commande selon l'une des revendications précédentes, l'appareil de commande étant agencé de telle sorte que la phase de démarrage s'achève quand le convertisseur est cadencé avec une cadence haute fréquence prédéfinie.

7. Appareil de commande selon l'une des revendications précédentes, l'appareil de commande étant agencé pour alimenter l'unité de commande (SE) dans la phase de démarrage, par le biais d'une résistance ($R_{startup1}$) à valeur ohmique élevée, en particulier une résistance supérieure à 1 M$\Omega$.

8. Appareil de commande selon l'une des revendications précédentes, l'unité de commande (SE) pouvant être alimentée à partir du côté secondaire du convertisseur, en particulier par le biais d'un enroulement auxiliaire (T12) côté secondaire sur le convertisseur.

9. Appareil de commande selon l'une des revendications précédentes, un réseau de circuits d'attaques (DRV) passif côté primaire étant prévu pour commander le commutateur (S1), et le réseau de circuits d'attaques (DRV) étant agencé pour, lors de la commande par l'unité de commande (SE), faire fonctionner le commutateur (S1), en particulier la grille d'un FET, avec une cadence spécifiée par l'unité de commande.

10. Appareil de commande selon l'une des revendications précédentes, l'appareil de commande étant agencé pour, dans la phase de démarrage, alimenter l'unité de commande (SE) de façon capacitive par le biais d'au moins un condensateur ($C_{lnk1}$).

11. Appareil de commande selon la revendication 10, un circuit de minutage (TM) étant prévu côté primaire lors de l'alimentation capacitive, en particulier avec un circuit RC externe, le circuit de minutage (TM) étant agencé pour faire varier périodiquement une tension d'alimentation, en particulier lissée et/ou redressée, du condensateur ($C_{lnk1}$) au moins au nombre de un et pour délivrer au condensateur ($C_{lnk1}$) au moins au nombre de un en particulier une tension de réseau ou un niveau zéro.

12. Appareil de commande selon la revendication 11, le circuit de minutage (TM) étant agencé pour régler la tension d'alimentation du condensateur ($C_{lnk1}$) au moins au nombre de un de telle sorte que l'intensité de démarrage), par ex. env. 10 - 100 $\mu$A, peut être mise à disposition pour l'unité de commande (SE).

13. Appareil de commande selon l'une des revendications précédentes, l'unité de commande (SE) étant agencée pour commander le commutateur (S1) par le biais d'un optocoupleur.

14. Appareil de commande selon l'une des revendications précédentes, une possibilité de configuration (Config) côté secondaire étant prévue pour régler une valeur de seuil pour une intensité traversant la ligne de LED (LS), en particulier en fonction d'un nombre de LED de la ligne de LED (LS).

15. Appareil de commande selon l'une des revendications précédentes, la séparation de potentiel étant une séparation de potentiel galvanique selon le standard SELV.

16. Appareil de commande selon l'une des revendications précédentes, l'unité de commande (SE) étant agencée pour commander le commutateur (S1) en fonction d'une tension d'entrée détectée côté secondaire.

17. Module LED, présentant un appareil de commande selon l'une des revendications précédentes et une ligne de LED (LS) ainsi alimentée.

18. Procédé de fonctionnement d'un appareil de commande pour des lignes de LED, dans lequel :

    - un convertisseur cadencé, avec séparation de potentiel, de l'appareil de commande, en particulier un convertisseur indirect, qui présente sur son côté primaire un commutateur (S1) cadencé, est alimenté côté primaire avec une tension d'alimentation de l'appareil de commande, et des connexions de l'appareil de commande pour la ligne de LED (LS) sont alimentées à partir du côté secondaire du convertisseur, et
    - une unité de commande (SE) de l'appareil de commande disposée côté secondaire commande le commutateur (S1) au moyen d'une séparation de potentiel, en particulier par induction,

**caractérisé en ce que**
l'alimentation de l'unité de commande (SE) s'effectue dans une phase de démarrage de l'appareil de commande par le biais d'une liaison sans séparation de potentiel à partir du côté primaire.

**Fig. 1**
(Stand der Technik)

**Fig. 2**
(Stand der Technik)

Fig. 3

Fig. 4

EP 2 891 382 B1

**IN DER BESCHREIBUNG AUFGEFÜHRTE DOKUMENTE**

**In der Beschreibung aufgeführte Patentdokumente**

- WO 2008151800 A1